# EUROPEAN PATENT SPECIFICATION

(11) **EP 0 751 714 B1**
(45) Date of publication and mention of the grant of the patent: **18.08.1999**
(21) Application number: 95912738.2
(22) Date of filing: 02.03.1995
(51) Int. Cl.: A23D 9/00

(54) **BETA-PRIME STABLE LOW-SATURATE, LOW TRANS, ALL PURPOSE SHORTENING**
STABILES, NIEDRIG GESAETTIGTES ALLZWECK- BACKFETT MIT BETA-PRIM-KRISTALLSTRUKTUR UND MIT EINEM NIEDRIGEN TRANSGEHALT
GRAISSE ALIMENTAIRE POLYVALENTE BETA-PRIME STABLE FAIBLE EN SATURES ET FAIBLE EN TRANS

(30) Priority: 23.03.1994 US 216390; 23.03.1994 US 216393
(43) Date of publication of application: 08.01.1997
(73) Proprietor: THE PROCTER & GAMBLE COMPANY, Cincinnati, Ohio 45202 (US)
(72) Inventor: SCAVONE, Timothy, Alan, Maineville, OH 45039 (US)
(74) Representative: Engisch, Gautier
(86) International application number: US9502745
(87) International publication number: WO9525433

(56) References cited:
- WO-A-91/09533
- WO-A-95/00033
- GB-A- 1 205 729
- US-A- 4 883 684
- US-A- 4 996 074
- PATENT ABSTRACTS OF JAPAN vol. 11 no. 200 (C-431) ,27 June 1987 & JP,A,62 022547 (TAIYO YUSHI KK) 30 January 1987,

## Description

A solid frying or baking shortening that is low in saturates, low in trans fatty acid and which has an onset of crystallization temperature below 80°F (27°C) is disclosed.

Plastic shortenings are generally produced by thermal and mechanical treatment of several components. In conventional plastic shortenings, lightly and intermediate hydrogenated vegetable oils are blended with fully hydrogenated oils (hardstock) in varying proportions to produce a product which is approximately 85% oil and 15% solid at room temperature. The quality and texture of shortcomings depend on incorporated gas, plasticity, consistency and solid to liquid ratio. The crystal phase of the fats used and the method of preparation affect these physical characteristics.

Although the beta (B) phase crystalline form of triglyceride is more thermodynamically stable than the beta prime (B') crystalline phase, plastic shortenings having a solid phase predominantly in the B' form are usually used because B shortenings tend to have a soupy, highly fluid consistency and/or a translucent appearance. It is well known in the art that B' crystals, if present, have the capacity to form a rigidly interlocking structure when suspended in a liquid component at sufficient concentration. However, plastic shortenings containing intermediate melting B' solid triglycerides are noticeably deficient in their ability to withstand storage at temperatures ranging from 90-100°F (32°C - 38°C) for periods of about 1-3 months without appreciable change in their performance and appearance. Some B' plastic shortenings firm excessively and thus become difficult to blend with other constituents in normal food recipes. Shortening blends of vegetable oils and fat derived from animals are B' phase plastic shortenings. These shortenings are also high in saturates and tend to be firm. Because both the B plastic shortening and B' plastic shortening lack desired features, a compromise is often made in preparing conventional plastic shortenings. Generally shortenings crystallized in the B' phase are preferred because of their uniform product appearance and stability over varying temperature ranges.

Conventional plastic shortenings comprise intermediate-melting, partially hydrogenated semi-solid fat commonly called "intermediate-melting fat" dispersed in the liquid oil, an unhardened or partially hydrogenated liquid oil commonly called "base oil", and a fully hydrogenated solid fat commonly called "hardstock". In general, the method of attaining the B' crystal form desired for plastic shortenings is to use a suitable B' tending highly hydrogenated or saturated hardstock. Conventional B' tending hardstocks contain triglycerides that may undergo polymorphic transformations and crystal size changes on processing and storage and/or on temperature variations under stress conditions. This transformation results in a shortening which has a poor appearance, poor volume and poor performance. Further, the hydrogenation process causes trans-isomeric forms of the mono and polyunsaturates to form. There is some concern that trans isomers and saturated fats in the diet may be linked to high levels of cholesterol in the blood (hypercholesterolemia).

The use of vegetable oils and margarine for cooking and baking are thought to be an effective means for lowering dietary intake of saturated fats and trans fatty acids. A typical vegetable oil has about 2.0 grams of saturates and 0 grams of trans per serving. Conventional margarine contains about 2.0 grams of saturated fat and 2.5 grams of trans fatty acids per serving as compared to vegetable plastic shortenings which typically contain from about 2.5 to about 3.5 grams of saturated fat and from about 2.0 to about 2.5 grams of trans fatty acids per serving. While vegetable oils and margarines are desirable from a health aspect, vegetable oil is often less desirable for baking due to lack of performance, e.g. "poor creamability". Margarines are less desirable for frying. In pan frying, margarines brown and burn, and in deep frying they are totally unusable. The browning is due to the reaction of the protein and sugars required by the margarine standard of identity.

Low trans isomer fat products (e.g., certain margarines and shortenings) are generally formed from a blend of interesterified fats, unsaturated vegetable oils, saturated vegetable oils and mixtures thereof. While these processes produce a low trans fat product, the product is often high in saturated fats. Other methods focus on reducing the saturated fat levels by utilizing the trans-isomer content of the unsaturated fatty acids to provide functional solids for the shortening or margarine.

An alternative product was made using an hydrogenated base oil low in saturates and low in trans, a mixture of a B tending hardstock and a B' tending hardstock having an IV of less than 10, an antioxidant, an emulsifier and an inert gas. A unique processing method was required to make an effective baking and frying shortening. This shortening had reduced levels of saturates and trans fatty acids. This was accomplished predominantly by reducing the level of trans fatty acids and saturates in the base oil by using an unhydrogenated base oil and an antioxidant, which provides oxidative stability, a highly efficient structuring system and high levels of inert gas dispersed in the shortening. The B' tending hardstock is responsible for obtaining the desired B'-like behavior even though the shortening is in the B phase. The B tending hardstock stabilizes the shortening in the B phase. A hydrogenated high erucic acid rapeseed hardstock was used in this product. However, this shortening had several performance negatives. It crystallized or solidified too fast, leaving a residue of fat in the frying pan as it cooled. The melting point was too high when baking cookies, cookie spread and browning were reduced, and the shortening texture was not optimal. When making pie crusts and cookie doughs, the shortening thinned excessively during mixing.

Surprisingly, it was found that these problems are eliminated by using a B' hardstock that is a triglyceride of palmitic and stearic acid consisting essentially of at least 65% of PSP and PSS, wherein the ratio of PSP:PSS is at least 0.8 to 1.0 and from 0 to 30% other triglycerides or synthetic fats and from 0 to 5% monoglyceridesor or diglycerides. PSS and PSP are defined below.

It is therefore an object of the present invention to provide a low saturate, low trans, B' stable plastic shortening suitable for use in preparation of a broad range of applications consisting of, but not limited to shortening, peanut butter stabilizers, cosmetics, confections, frostings, baked goods, prepared cake mixes and margarine.

It is also the object of the present invention to provide a B' stable plastic shortening exhibiting superior product appearance, texture, and stability, and to provide a method for its preparation.

It is also the object of the present invention to provide a B' stable plastic shortening having a uniform consistency and which does not have a tendency to firm over a wide range of temperatures, which is stable to temperature cycling, and which does not solidify too rapidly or shear thin excessively.

These and other objects will become apparent from the following detailed description. All percentages herein are by weight unless otherwise specified.

The present invention is directed to a B' plastic shortening which has a reduced level of saturates and trans fatty acid isomers comprising:
(1) from 6% to 25%, preferably from 8% to 23%, most preferably from 10% to 20% by volume of an inert gas;
(2) said fat phase consists essentially of:
   a) from 74% to 90%, preferably from 80% to 90% of an edible oil; said edible oil having from 0% to 10%, most preferably from 0% to 8% trans fatty acid isomers, and less than 16% saturated fatty acids, preferably less than 10% saturated fatty acids and preferably at least 0.01% naturally occurring tocopherol;
   b) from 10% to 20%, preferably from 11% to 16% of a beta prime hardstock consisting essentially of:
      of at least 65% of PSP and PSS, wherein the ratio of PSP:PSS is at least 0.8 to 1.0, from 0 to 30% other triglycerides or synthetic fats and from 0 to 5% monoglycerides or diglycerides, and optionally,
   (3) from 25 to 500 parts per million (hereinafter "ppm") antioxidant, preferably at least 50 ppm but no more than 300 ppm;
   (4) from 1% to 8%, preferably from 1% to 6% of a B' stable emulsifier having from 25% to 95% preferably from 30% to 95% monoglyceride.

Conventional processing is used for making the low saturate, low trans B' stable plastic shortening.

These products can be made without the inert gas. These B' plastic shortenings have a reduced level of saturated and trans fatty acid isomers consisting essentially of:
a) from 74% to 90%, preferably from 80% to 90% of an edible oil; said edible oil having from 0% to 10%, most preferably from 0% to 8% trans fatty acid isomers, and less than 16% saturated fatty acids, preferably less than 10% saturated fatty acids and preferably at least 0.01% naturally occurring tocopherol.
b) from 10% to 20%, preferably from 11% to 16% of a beta prime hardstock consisting essentially of: at least 65% of PSP and PSS, wherein the ratio of PSP:PSS is at least 0.8 to 1,0 from 0 to 30% other triglycerides or synthetic fats and from 0 to 5% monoglycerides or diglycerides.

Optionally, the B' shortening can contain from 25 to 500 ppm antioxidant, and from 1% to 8%, preferably from 1% to 6% of a B' stable emulsifier having from 25% to 95%, preferably from 30% to 95% monoglyceride.

The present invention relates to a B' stable plastic shortening. The term "plastic" as used herein is utilized to designate a shortening product which appears to be solid at room temperature The shortening need not contain dispersed gases other than air or gas incorporated in processing.

The term "fat" as used herein is intended to include all edible, fatty acid triglycerides regardless of origin or whether they are solid or liquid at room temperature. Thus, the term "fat" includes normally liquid and normally solid vegetable and animal fats and oils. The term "oil" as employed herein, is intended to refer to those fats which are liquid in their unmodified state. Natural and synthetic fats and oils are included in these terms.

The term "beta prime" or "B'" as used herein defines an overall tendency of certain triglyceride solids to crystallize and remain stable for the most part in a beta prime phase. This does not mean, however, that under proper conditions, triglyceride solids cannot be transformed from B' phase to B phase. The types of polymorphic crystalline structures of fats can be identified by their X-ray diffraction patterns and are described in US-A-2,521,241 and US-A-2,521,242.

The term "edible oil" or "base oil" as used herein refers to an oil which is substantially liquid at room temperature and has an IV of greater than 70, more preferably greater than 90. The base oil can be unhydrogenated oil or partially hydrogenated oil, modified oil or mixtures thereof.

The term "PSP" as used herein refers to a triglyceride of palmitic and stearic acid wherein the palmityl groups occupy the 1 and 3 positions and the stearyl group is in the 2 position. Similarly, the term "PSS" refers to a triglyceride of palmitic and stearic acid wherein the palmitic acid is in the 1 or 3 position and two stearic acids occupy the 2 and remaining terminal or 1,3 position.

The term "saturates", "saturated fat", and "saturated fatty acids" as used herein refer to C₄ to C₂₆ fatty acids or esters containing no unsaturation unless otherwise indicated.

The term "trans", "trans fatty acids", "trans isomers" and "trans isomers of fatty acids" as used herein refer to fatty acids and/or esters containing double bonds in the trans configuration usually resulting from hydrogenation or partial hydrogenation of a fat. A method suitable for measuring the trans isomers of the present invention and the components therein is described by Madison, et al. in "Accurate Determination of Trans Isomers in Shortening and Oils by Infrared Spectrophotometry", in J. Amer. Oil Chem Soc., Vol. 59, No. 4 (April, 1982), pp. 178-81.

The term "iodine value" or "IV" as used herein refers to the number of grams of iodine equivalent to halogen adsorbed by a 100 gram sample of fat. This is a measure of the unsaturated linkages in a fat. The IV or a fat or oil can be determined by the AOCS Official Method Col. 1-25, also known as the Wijs method.

The term "serving size" as used herein refers to FDA regulation 21 CFR 101.9(b) and 21 CFR 101.12.

The present invention relates to a low-saturate, low-trans B' stable plastic shortening which comprises: less than about 5 gm, preferably less than about 3 gm saturated fatty acids per serving, and from about 0 gm to about 1 gm, preferably less than 0.5 gm trans isomer content per serving.

### THE COMPONENTS

### Inert Gas

The product appearance, overall consistency and performance of a plastic shortening is partially due to the bubble size of the inert gas dispersed in the shortening and partially due to the total amount of inert gas present in the shortening formula. A wide range of shortening consistencies and appearances are possible. However, incorporating large volumes of inert gas may cause a poor structure and a Swiss cheese appearance. The cheesy appearance is caused primarily by the coalescence of gas bubbles, which create "voids" or "pockets" of gas in the plastic shortening. An inert gas is used to control product consistency and to reduce the amount of saturates and trans fatty acids present in the total volume of the plastic shortening. It is preferable to incorporate from 6% to 25%, preferably from 8% to 23%, most preferably from 10% to 20% by volume nitrogen into the shortening. In addition to nitrogen, argon, helium, carbon dioxide and mixtures of the gases can be used. Vegetable shortenings typically contain from 10-12% nitrogen by volume and may be firm or soft and creamy in their blendability characteristics. Plastic shortenings made from meat fats may contain up to 22% nitrogen by volume, however, they are very firm and difficult to blend. Controlling the freezing and crystallizing process produces a vegetable shortening with an inert gas level as high as 18 to 20% that performs as well as shortenings with lower inert gas levels and is soft and easy to blend. The products have a smooth, creamy appearance with no Swiss cheese appearance.

### Base Oil

The B' plastic shortening contains from 74% to 90%, preferably from 80% to 90% of an edible oil (hereinafter referred to as "base oil"). The base oil has an IV of above 70 preferably more than 90, and most preferably from 90 to 120 and is substantially liquid at room temperature. Base oil is an unhydrogenated or partially hydrogenated oil which has no more than 16% C₄-C₂₆ saturated fatty acids and has no more than 10% trans fatty acids. Preferably the base oil has less 10% and most preferably less than 8% saturated fatty acids.

Refined and blended canola oil and high oleic acid sunflower seed oil having less than 2% trans isomers of fatty acids are preferred base oils. Trans isomers in the base oil contribute to total trans level in the plastic shortening. Refined and bleached canola oil is particularly suitable because it has a low level of saturated fatty acids, requires no hydrogenation, and has a low level of trans-isomers of unsaturated fatty acids. The source of oils and/or method used to make the base oil are not important, so long as the base oil is an unhydrogenated or partially hydrogenated oil and has no more than 16% saturated fatty acids, and preferably no more than 2% trans isomers of unsaturated fatty acids. Of course, genetically bred, biogenerated or microbial source oils having the requisite characteristics would be suitable.

Other oils suitable for the purpose of this invention can be derived, for example from the naturally occurring liquid oils such as sunflower oil, soybean oil, olive oil, corn oil, peanut oil, safflower oil, high oleic sunflower oil, low linoleic canola oil, high oleic safflower oil, glycerol esters of purified fatty acid methyl esters, polyglycerol esters as long as saturates and trans isomers level are within the preferred range and mixtures thereof. Also, suitable liquid oil fractions can be obtained from palm oil, lard, and tallow, for example, as by fractionation or by direct interesterification, followed by separation of the oil.

### The Hardstock

The plastic shortening also comprises from 10% to 20%, preferably from 11% to 16% hardstock which is solid at room temperature. Hardstock provides high temperature stability to the low saturate, low trans shortening. The hardstock comprises from 10% to 20%, preferably from 11% to 16% of a beta prime hardstock consisting essentially of: at least 65% of PSP and PSS, wherein the ratio of PSP:PSS is at least 0.8 to 1.0 and from 0 to 30% other triglycerides or synthetic fats and from 0 to 5% monoglycerides or diglycerides. Preferably, the level of PSP in the beta prime hardstock is from 35% to 98%, and most preferably PSP is present at from 38% to 80%. The level of PSS is preferably from 2% to 65%, and most preferably from 10% to 61%. The remaining synthetic or naturally triglycerides can be any compatible fat composition. Usually these materials will be the naturally occurring non-PSS and PSP materials found in the oil or fat from which the PSP and PSS are derived. It is most preferred that the beta prime hardstock not contain more than 3% mono and diglycerides of palmitic and stearic acid.

PSP is found in cottonseed stearine and hydrogenated cocoa butter, Phulwara butter, Chinese vegetable tallow and whole or fractionated palm oil which has been hydrogenated.

This beta prime tending hardstock preferably has an IV of less than about 10, preferably less than about 8.

### Antioxidant

The edible base oil has a tendency to oxidize. Some oils contain a natural antioxidant and others are naturally stable to oxidation. For the naturally stable oils, it is not necessary to add an antioxidant. Preferably the base oil contains a total from 25 to 500 ppm, more preferably from 50 to 300 ppm of added antioxidant but no more than about 500 ppm. It is important that the level of antioxidant be controlled. Some antioxidants provide increasing protection as the concentration increases. At higher levels some can act as prooxidants. A proper balance must be maintained between the quantity which provides maximum stabilization and that which participates in the chain reaction and thereby intensifies oxidation. The antioxidant allows the use of an unhydrogenated base oil in the formula.

The antioxidant tocopherol that is naturally present in the base oil at levels of about 0.01% or greater provides some oxidative stability to the plastic shortening. If the oil has been treated or processed to remove tocopherol, it can be added back at an effective level.

A wide variety of antioxidants are suitable for use, including but not limited to butylated hydroxytoluene (BHT), butylated hydroxyanisole (BHA), tertiary butylhydroquinone (TBHQ), ethylenediaminetetracetic acid (EDTA), gallate esters (i.e. propyl gallate, butyl gallate, octyl gallate, dodecyl gallate, etc.), tocopherols, citric acid, citric acid esters (i.e. isopropyl citrate, etc.), gum guaiac, nordihydroguaiaretic acid (NDGA), thiodipropionic acid, ascorbic acid, ascorbic acid esters (i.e. ascorbyl palmitate, ascorbyl oleate, ascorbyl stearate, etc.) tartaric acid, lecithin, methyl silicone, polymeric antioxidant (Anoxomer) plant (or spice and herb) extracts (i.e. rosemary, sage, oregano, thyme, marjoram, etc.) and mixtures thereof. The preferred antioxidant for use in the present invention is ascorbyl palmitate in combination with tocopherol.

### Emulsifier

If desired, the product may contain small percentages of known B' compatible emulsifiers such as mono- and diglycerides, distilled monoglycerides, polyglycerol esters of C₁₂ to C₂₂ fatty acids, propylene glycol mono and diesters of C₁₂ to C₂₂ fatty acids, sucrose mono- and diesters of C₁₄ to C₂₂ fatty acids. Particularly suitable emulsifiers are mono- and diglycerides of partially hydrogenated soybean oil, or mixtures thereof. Such emulsifiers if added should be from 1% to 8% of the total shortening. Preferably, said emulsifier comprises a minimum of about 35% monoglycerides. Such emulsifiers can be effective at modifying certain properties of the low saturate, low trans shortening. The emulsifier influences the shortening's baking performance.

### Additional Ingredients

From about 0.05% to about 3% of other ingredients such as flavoring and coloring can also be added to the shortening of this invention. These include butter flavors, meat or tallow flavors, olive oil flavors and other natural or synthetic flavors. Vitamins can also be included in the oil. Various other additives can be used in the shortening of the invention provided that they are edible and aesthetically desirable. It should be recognized, however, that the presence of other additives may have an adverse effect upon the stabilizing properties of the shortening of this invention and, therefore, the desirability of the use of other additives will depend upon the overall shortening qualities desired.

### Method of Preparation - Gas Containing Shortening

There is no special apparatus or processing equipment needed. Conventional equipment may be used to process low-saturate, low trans, beta prime plastic shortening.

The processing is conventional and normally comprises the steps of:
(1) Fully melting and mixing said base oil, hardstock mixture, antioxidant and emulsifier at a temperature of from about 120°F (48°C) to about 180°F (82°C);
(2) injecting from about 6% to about 25%, preferably from about 10% to about 20% by volume of an inert gas under a pressure of from about 442.8 kPa (50 psig) to 4924.6 kPa (700 psig) to form a shortening mixture;
(3) rapidly cooling said shortening mixture in a scraped surface heat exchanger to a temperature of from about 40°F (4°C) to about 70°F (21°C);
(4) agitating said shortening mixture in a picker box sufficiently to impart enough work input such that said shortening mixture has a finished shortening consistency of from about 160mm/10 to about 270mm/10 and a maximum inert gas bubble size of less than 1mm;
(5) heating said shortening mixture in a scraped surface heat exchanger and placing into a suitable container; said shortening mixture hang a filling temperature of from about 70°F (21°C) to about 92°F (33°C), preferably from about 75°F (24°C) to about 80°F (27°C);
(6) tempering said shortening at a temperature of from about 80°F (27°C) to about 110°F (43° C), preferably from at least about 80°F (27°C) to about 90°F (32°C) for at least about 24 hours;
   It is critical to obtain the desired set-up rate in the process to prevent inert gas bubble coalescence.

### Method of Preparation - Gas Free Shortening

There is no special apparatus or processing equipment needed. Conventional equipment may be used to process low-saturate, low trans, beta prime plastic shortening or frying fat without gas injection.

The processing is conventional and normally comprises the steps of:
(1) Fully melting and mixing said base oil, hardstock mixture, antioxidant and emulsifier at a temperature of from about 120°F (48°C) to about 180°F (82°C);
(2) rapidly cooling said shortening mixture in a scraped surface heat exchanger to a temperature of from about 40°F (4°C) to about 70°F (21°C);
(3) agitating said shortening mixture in a picker box sufficiently to impart enough work input such that said shortening mixture has a finished shortening consistency of from about 160mm/10 to about 270mm/10;
(4) heating said shortening mixture in a scraped surface heat exchanger and placing into a suitable container; said shortening mixture having a filling temperature of from about 70°F (21°C) to about 92°F (33°C), preferably from about 75°F (24°C) to about 80°F (27°C);
(5) tempering said shortening at a temperature of from about 80°F (27°C) to about 110°F (43° C), preferably from at least about 80°F (27°C) to about 90°F (32°C) for at least about 24 hours;
   It is also important to provide enough work input in either process to obtain the desired finished shortening penetration. These objectives can be achieved by increasing the amount of work input to soften the shortening (i.e., greater agitation in the picker box, high agitation from an extra scraped surface heat exchanger or other device to apply added work input) and by controlling the Picker Residence Time and/or decreasing the filling temperature to prevent nitrogen bubble coalescence.

The preferred method used to prepare the shortening and to obtain the necessary beta prime phase crystalline structure, is to heat the mixture of the base oil, hardstock blend, antioxidant and emulsifier, if desired, to a temperature from about 120° (49°C) to about 180°F (82°C). The temperature must be at least above the melting point of its solid components to form a melt. From about 6% to about 25%, preferably from about 8% to about 23% most preferably from about 10% to about 20% volume of an inert gas is injected into the melt under a pressure of from 442.8 to 4924.6 kPa (50 to 700 psig). The shortening melt is passed through a scraped surface heat exchanger and rapidly cooled in less than about 60 seconds and preferably in less than about 30 seconds to a temperature of from about 40°F (4°C) to about 70°F (21°C) to initiate fat crystallization therein. The cooled mixture is then agitated in a picker box to impart enough work input such that said shortening mixture has a finished shortening consistency of from about 160mm/10 to about 275mm/10 and an inert gas bubble size less than 1mm. This can usually be accomplished in from about 1 to about 8 minutes, preferably in about 3 to about 6 minutes.

The mixture is then heated in a scraped surface heat exchanger with variable revolutions per minute until the plastic shortening has a grease cone viscosity after 5 minutes of from about 100 to about 300 mm/10 to prevent nitrogen bubble coalescence. The grease cone viscosity is indicative of the ability of the shortening to temper to the appropriate finished shortening penetration. The finished shortening should have 180 to 275mm/10 shortening penetration. A suitable method for determining finished shortening penetration is illustrated in the following reference; US-A-4,996,074 to Seiden and White, (assigned to The Procter & Gamble Company), issued February 26, 1991 (Tailored Beta-Prime Stable Triglyceride Hardstock).

The grease cone analysis is the same as the penetration analysis in the above-mentioned US-A-4,996,074 except the precision cone 73525 was used. The cone weighs 35 grams, has a 6.7 cm (2-5/8 inch) diameter and is 7.9 cm (3-1/8 inches) in length. The grease cone penetration is measured about 5 minutes after filling the package. The shortening is heated to a filling temperature of from about 70° (21°C) to about 95°F (3°C). The shortening is immediately put into suitable containers. The package shortening is then tempered at a constant temperature of from about 80°F (27°C) to about 100°F (38°C) for at least about 24 hours.

The low-saturate, low trans plastic B' shortening of the present invention uses conventional equipment for making it and the process can be varied by one skilled in the art to achieve the B' plastic shortening of the present invention.

Table 1 compares the shortenings made in Examples 1 and 2 with conventional shortenings in a stick or other form, e.g. Crisco shortening an all vegetable shortening manufactured by the Procter & Gamble Company.

### EXAMPLE 1

### Low Saturate, Low Trans Beta Prime Stable Shortening

A low saturate, low trans beta stable shortening having 2.20 grams of saturates and 0.15 grams of trans per serving and a penetration of 224 mm/10 is prepared as follows:

A 181.4 kg (400 pound) blend of shortening comprising 42.10 parts of refined and bleached unhydrogenated Canola Oil (with a chemical saturates level of 6.8%), 42.10 parts of refined, bleached and dewaxed High Oleic Sunflower Oil (a genetically bred sunflower oil with a chemical saturates level of 5.8%), 12.8% of Chocomate 1000® (a high POP mid fraction of palm oil manufactured by Intercontinental Specialty Fats SDN.BHD., an Associate Company of Lam Malaysia & Walter Rau, W. Germany, P.O. Box 207, Port Klang, Selangor, Malaysia) was hydrogenated to an iodine value less than 10 to give a hardstock with 73.2% PSP with a ratio of PSP:PSS of 4.2:1 is prepared. This blend is deodorized at 450°F (232°C) in a batch deodorizer unit for two hours using moderate stripping steam levels and a vacuum of less than 1.07 kPa (8 mm Hg). To the deodorized mixture, 100 ppm of a 25% citric acid solution in water at about 300°F (149°C) is added while cooling the vessel. The mixture is then cooled to 160°F (71°C) and filtered through a one micron filter. To this cooled mixture 3.0 parts of mono and diglycerides (one such acceptable supply of this material is DUR-EM 300 manufactured by Van Den Bergh Foods), and 100 ppm of Ascorbyl Palmitate, (manufactured by Hoffman-LaRoche) is added. This blend contains 18.8% chemical saturates and 1.3% trans isomers. The blend is placed in the finishing process melt tank where it was held at about 150°F (66°C). A minor portion of butter flavors and color is added to the melt tank and allowed to mix for about an hour. The melted shortening is then continuously fed into the freezing process through a high pressure pump. Nitrogen at a level of about 12% by volume is injected prior to the pump and prior to entering the freezer. The pressure in the freezer is maintained above 2166.6 kPa (300 psig). The shortening is then fed at a rate of 149.7 kg (330 pounds) per hour through two brine cooled "Votator" brand 7.6 cm (3 inch) by 30.5 cm (12 inch) scraped surface heat exchangers piped in series. The brine inlet temperature is maintained below 0°F (-17.78°C). The shortening mixture is cooled to a freezer outlet temperature of 50°F (10°C). The chilled stock then flows into a picker box. The picker box, manufactured by Votator 15.2 cm by 61.0 cm (6 inch by 24 inch), operates at a shaft speed of 422 revolutions per minute (hereinafter "RPM") and contains 3 minutes of residence time. The time is key to work soften the shortening to improve its blendability and softness and to prevent inert gas bubble coalescence that may lead to a cheesy appearance. After exiting the picker box, the shortening is heated to a filling temperature of 80°F (27°C) through a Votator scraped surface heat exchanger using warm water at about 100°F (38°C). The shortening is passed through a slotted valve with a 0.040 inch (0.102cm) clearance where the pressure is lowered from about 2235.6 kPa (310 psig) to atmospheric pressure and filled into a preformed shortening stick package. The set up rate of the shortening is quick enough to prevent nitrogen bubble coalescence and the grease core penetration was 204 five minutes after filling. The shortening is then allowed to temper in an 85°F (29°C) constant temperature room for 48 hours. After returning the shortening to 70°F (21°C) for two days, the appearance of the shortening and the penetrating is measured. The texture and appearance are smooth and creamy. The onset of crystallization is 79.7 °F (26.5 °C). The viscosity of the structure after exposure to shear is 77.3 Pas.

### EXAMPLE 2

### Low Saturate, Low Trans Beta Stable Shortening

A low saturate, low trans beta stable shortening having 2.09 grams of saturates and 0.08 grams of trans per serving and a penetration of 202 mm/10 is prepared as follows:

A 181.4 kg (400 pound) blend of shortening comprising 65.0 parts of refined, bleached and dewaxed High Oleic Sunflower Oil (a genetically bred sunflower oil with a chemical saturates level of 5.8%). 20.0 parts of refined and bleached unhydrogenated Canola Oil (with a chemical saturates level of 7.1%), 9.0 parts of a high erucic acid rapeseed hardstock (hereinafter referred to as "HEAR hardstock") with a behenic acid level of 45% hydrogenated to an iodine value less than 10, and 4.5 parts refined and bleached Canola oil hydrogenated to an iodine value of less than 10 is prepared. This blend is deodorized at 450°F (232°C) in a batch deodorizer unit for two hours using moderate stripping steam levels and a vacuum of less than 1.07 kPa (8 mm Hg). To the deodorized mixture, 100 ppm of a 25% citric acid solution in water at about 300°F (149°C) is added while cooling the vessel. The mixture is then cooled to 160°F (71°C) and filtered through a one micron filter. To this cooled mixture 1.5 parts of distilled monoglycerides (one such acceptable supply of this material is Dimodan O manufactured by Grinsted) is added. This blend contains 19.2% chemical saturates and 0.7% trans isomers. The blend is placed in the finishing process melt tank where it was held at about 150°F (66°C). A minor portion of butter flavors and color is added to the hold tank and allowed to mix for about an hour. The melted shortening is then continuously fed into the freezing process through a high pressure pump. Nitrogen at a level of from about 18%-20% by volume is injected prior to the pump and prior to entering the freezer. The pressure in the freezer is maintained above 2166.6 kPa (300 psig). The shortening is then fed at a rate of 154.2 kg (340 pounds) per hour through two brine cooled "Votator" brand 7.6 cm by 30.5 cm (3 inch by 12 inch) scraped surface heat exchangers piped in series. The brine inlet temperature is maintained below 0°F (-17.78°C). The shortening mixture is cooled to a freezer outlet temperature of 50°F (10°C). The chilled stock then flows into a picker box. The picker box, manufactured by Votator 15.2 cm by 61.0 cm (6 inch by 24 inch), operates at a shaft speed of 410 revolutions per minute (hereinafter "RPM") and contains about 3 minutes of residue time. The time is key to allow the polymorphic phase to transition to occur, and to work soften the shortening to improve its blendability and softness. Allowing the phase to transition before exiting the process gives the shortening its glossy appearance and prevents inert gas bubble coalescence that may lead to a cheesy appearance. After exiting the picker boxes, the shortening is heated to a filling temperature of 80°F (27°C) through a Votator scraped surface heat exchanger using warm water at about 120°F (49°C). The shortening is passed through a slotted valve with a 0.040 inch (0.102 cm) clearance where the pressure is lowered from 2580.3 kPa (360 psig) to atmospheric pressure and filled into a can. The set up rate of the shortening is quick enough to prevent nitrogen bubble coalescence and the grease cone penetration was 60 five minutes after filling. The shortening is then allowed to temper in an 85°F (29°C) constant temperature room for 48 hours. After returning the shortening to 70°F (21°C) for two days, the appearance of the shortening and the penetration is measured. The appearance is smooth and creamy. The bubble is less than 1 mm.

### EXAMPLE 3

### Low Saturate, Low Trans Beta Prime Stable Shortening

A series of bench top blends of low saturates and trans beta prime shortenings were made to compare the shear resistance, melting and solidification properties versus typical shortenings and versus the beta low saturates and trans shortening of Example 2. The bench top materials were compared with a commercial blend (Blend 1) to show that they were equivalent processes.

50 grams each of four shortening blends were made as shown below.

**TABLE 1**

| **Component** | **Blend 1** | **Blend 2** | **Blend 3** | **Blend 4** |
|---|---|---|---|---|
| Canola Oil (refined, bleached and deodorized) | 85.0 parts | 85.5 parts | 86.0 parts | 86.5 parts |
| Fully Hydrogenated Chovetta 1000® Palm mid fraction | 13.5 parts | 13.0 parts | 12.5 parts | 12.0 parts |
| Dimodan O emulsifier | 1.5 parts | 1.5 parts | 1.5 parts | 1.5 parts |
| Total | 100 parts | 100 parts | 100 parts | 100 parts |

Chovetta 1000® Palm mid-fraction contains 1% diglyceride, 3.9% PPP, 69.3% PSP, 19.3% PSS and 3.7% SSS. The total PSP and PSS is 88.6%. The ratio of PSP:PSS is 3.6:1. It also contains other triglycerides.

These shortening blends were then fully melted at about 150 °F (65 °C) and frozen by pouring the melted fat into a pie tin sitting in an ice bath. After allowing the sample to cool for about 3 minutes the samples were tempered at 85°F (29°C) for 48 hours and then returned to 70°F (21°C) for 2 days. For comparison purposes a standard Crisco® shortening sample was melted and recrystallized using the above sample freezing and tempering procedure and compared to shortening frozen using normal shortening processing (i.e. similar to that described in Example 1). The full melting point and the onset of crystallization of each blend was measured with a Perkin Elmer DSC 4 model using a cooling and heating rate of 5°C per minute. The shear resistance of each material was measured using a plate and cone rheometer (Bohlin Visco 88 BV) with the 5.44 ° cone, 0.15 mm plate and cone gap and a 17.5 sec ⁻¹ shear rate. The higher the viscosity after shear, the stronger and more shear resistant is the crystal structure of the shortening. The rate of crystallization at mouth temperature was measured by fully melting each sample and then placing the sample in a 92°F (33.3°C) bath. The % solids were measured with a Brucker low magnetic resonance unit (using the direct method of measuring solid fat content) after 15 minutes of hold time in the 92°F (33.3°C) bath.

The beta shortening of Example 2 made with the blend of beta and beta prime hardstock has a high temperature at which the onset of crystallization occurs, 39.4°C (103°F). This means that the fat will solidify on the cooking utensils and the serving plates. This is not aesthetically pleasing. The beta prime shortening crystallizes at about the same temperature as the control product.

Second, the low saturates/low trans B' shortening of Blends 1-4, like the Crisco control, does not form solids at mouth temperature (33.3°C- 92°F) that leas to greasy mouthfeel whereas the B shortening forms 12% solids at mouth temperature. Third, the shear resistance (resistance to break down in performance applications such as pie crust making) is greater/superior for the B' low saturates/low trans products of Blends 1-4.

Thus, this new low saturates and low trans shortening has the melting and solidification profile of conventional shortenings but has the advantage of lower saturates and trans levels and superior shear resistance. Second it has superior melting, solidification and shear resistance to the B shortening of Example 2.

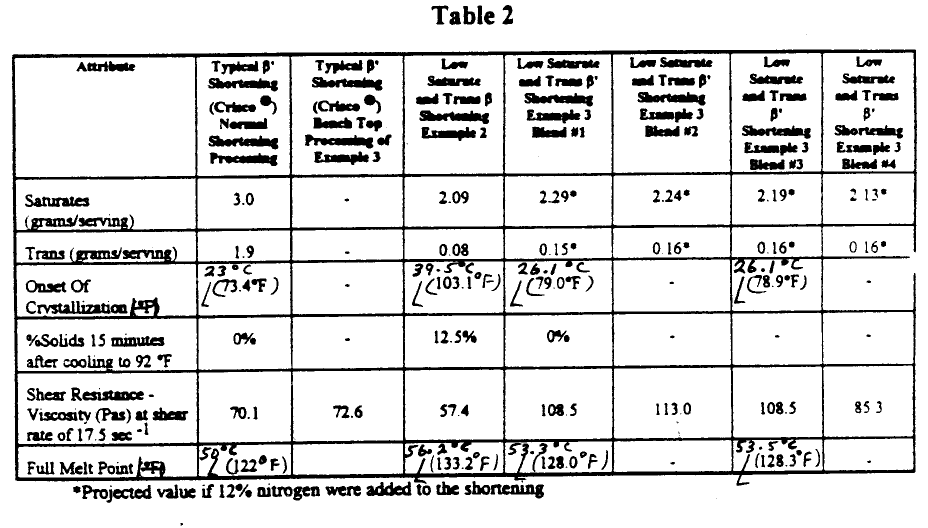

### EXAMPLE 4

### Low Saturate, Low Trans Beta Prime Stable Shortening

A low saturate, low trans beta stable shortening having 2.5 grams of saturates and 0.17 grams of trans per serving and a penetration of 224 mm/10 is prepared as follows:

A 181.4 kg (400 pound) blend of shortening comprising 42.10 parts of refined and bleached unhydrogenated Canola Oil (with a chemical saturates level of 6.8%), 42.10 parts of refined, bleached and dewaxed High Oleic Sunflower Oil (a genetically bred sunflower oil with a chemical saturates level of 5.8%), 12.8% of Chocomate 1000® (a high POP mid fraction of palm oil manufactured by Intercontinental Specialty Fats SDN.BHD., An Associate Company Of Lam Malaysia & Walter Rau, W. Germany, P.O. Box 207, Port Klang, Selangor, Malaysia) was hydrogenated to an iodine value less than 10 to give a hardstock with 73.2% PSP with a ratio of PSP:PSS of 4.2:1 is prepared. This blend is deodorized at 450°F (232°C) in a batch deodorizer unit for two hours using moderate stripping steam levels and a vacuum of less than 1.07 kPa (8 mm Hg). To the deodorized mixture, 100 ppm of a 25% citric acid solution in water at about 300°F (149°C) is added while cooling the vessel. The mixture is then cooled to 160°F (71°C) and filtered through a one micron filter. To this cooled mixture 3.0 parts of mono and diglycerides (one such acceptable supply of this material is DUR-EM 300 manufactured by Van Den Bergh Foods), and 100 ppm of Ascorbyl Palmitate, (manufactured by Hoffman-LaRoche) is added. This blend contains 18.8% chemical saturates and 1.3% trans isomers. The blend is placed in the finishing process melt tank where it is held at about 150°F (66°C). A minor portion of butter flavors and color is added to the melt tank and allowed to mix for about an hour. The melted shortening is then continuously fed into the freezing process through a high pressure pump. The shortening is then fed at a rate of 149.7 kg (330 pounds) per hour through two brine cooled "Votator" brand 7.6 cm by 30.5 cm (3 inch by 12 inch) scraped surface heat exchangers piped in series. The brine inlet temperature is maintained below 0°F (-17.78°C). The shortening mixture is cooled to a freezer outlet temperature of 50°F (10°C). The chilled stock then flows into a picker box. The picker box, manufactured by Votator 15.2 cm by 61.0 cm (6 inch by 24 inch), operates at a shaft speed of 422 revolutions per minute (hereinafter "RPM") and contains 3 minutes of residence time. The time is key to work soften the shortening to improve its blendability and softness. After exiting the picker box, the shortening is heated to a filling temperature of 80°F (27°C) through a Votator scraped surface heat exchanger using warm water at about 100°F (38°C). The shortening is passed through a slotted valve with a 0.040 inch (0.102 cm) clearance where the pressure is lowered from about 2235.6 kPa 310 psig to atmospheric pressure and filled into a preformed shortening stick package. The shortening is allowed to temper in an 85 °F (29°C) constant temperature room for 48 hours. After returning the shortening to 70°F (21°C) for two days, the appearance of the shortening and the penetration is measured. The texture and appearance are smooth and creamy. The onset of crystallization is 79.7°F (26.5°C). The viscosity of the structure after exposure to shear is 77.3 Pas.

### EXAMPLE 5

### Low Saturate, Low Trans Beta Stable Shortening

A low saturate, low trans beta stable shortening having 2.37 grams of saturates and 0.09 grams of trans per serving and a penetration of 202 mm/10 is prepared as follows:

A 181.4 kg 400 pound blend of shortening comprising 65.0 parts of refined, bleached and dewaxed High Oleic Sunflower Oil (a genetically bred sunflower oil with a chemical saturates level of 5.8%), 20.0 parts of refined and bleached unhydrogenated Canola Oil (with a chemical saturates level of 7.1%), 9.0 parts of a high erucic acid rapeseed hardstock (hereinafter referred to as "HEAR hardstock") with a behenic acid level of 45% hydrogenated to an iodine value less than 10, and 4.5 parts refined and bleached Canola oil hydrogenated to an iodine value of less than 10 is prepared. This blend is deodorized at 450°F (232°C) in a batch deodorizer unit for two hours using moderate stripping steam levels and a vacuum of less than 1.07 kPa (8 mm Hg). To the deodorized mixture, 100 ppm of a 25% citric acid solution in water at about 300°F (149°C) is added while cooling the vessel. The mixture is then cooled to 160°F (71°C) and filtered through a one micron filter. To this cooled mixture 1.5 parts of distilled monoglycerides (one such acceptable supply of this material is Dimodan O manufactured by Grinstead) is added. This blend contains 19.2% chemical saturates and 0.7% trans isomers. The blend is placed in the finishing process melt tank where it is held at about 150°F (66°C). A minor portion of butter flavors and color is added to the hold tank and allowed to mix for about an hour. The melted shortening is then continuously fed into the freezing process through a high pressure pump. The pressure in the freezer is maintained above 2166.6 kPa (300 psig). The shortening is then fed at a rate of 154.2 kg (340 pounds), per hour through two brine cooled "Votator" brand (3 inch by 12 inch) scraped surface heat exchangers piped in series. The brine inlet temperature is maintained below 0°F (-17.78°C). The shortening mixture is cooled to a freezer outlet temperature of 50°F (10°C). The chilled stock then flows into a picker box. The picker box, manufactured by Votator 15.2 cm by 61.0 cm (6 inch by 24 inch), operates at a shaft speed of 410 revolution per minute (hereinafter "RPM") and contains about 3 minutes of residue time. The time is key to allow the polymorphic phase to transition to occur, and to work soften the shortening to improve its blendability and softness. Allowing the phase to transition before exiting the process gives the shortening its glossy appearance. After exciting the picker boxes, the shortening is heated to a filling temperature of 80°F (27°C) through a Votator scraped surface heat exchanger using warm water at about 120°F (49°C). The shortening is passed through a slotted valve with a 0.040 inch (0.102 cm) clearance where the pressure is lowered from 2580.3 kPa (360 psig) to atmospheric pressure and filled into a can. The set up rate of the shortening is quick enough to create a grease cone penetration of about 60 five minutes after filling. The shortening is then allowed to temper in an 85°F (29°C) constant temperature room for 48 hours. After returning the shortening to 70°F (21°C) for two days, the appearance of the shortening and the penetration is measured. The appearance is smooth and creamy.

### EXAMPLE 6

### Low Saturate, Low Trans Beta Prime Stable Shortening

A series of bench top blends of low saturates and trans beta prime shortenings are made to compare the melting and solidification properties versus typical shortenings and versus the beta low saturates and trans shortening of Example 5. The bench top materials are compared with a commercial blend (Blend 1) to show that they are equivalent processes.

50 grams each of four shortening blends are made as shown below.

**TABLE 3**

| **Component** | **Blend 1** | **Blend 2** | **Blend 3** | **Blend 4** |
|---|---|---|---|---|
| Canola Oil (refined, bleached and deodorized) | 85.0 parts | 85.5 parts | 86.0 parts | 86.5 parts |
| Fully Hydrogenated Chovetta 1000® Palm mid fraction | 13.5 parts | 13.0 parts | 12.5 parts | 12.0 parts |
| Dimodan O emulsifier | 1.5 parts | 1.5 parts | 1.5 parts | 1.5 parts |
| Total | 100 parts | 100 parts | 100 parts | 100 parts |

Chovetta 1000® Palm mid-fraction contains 1% diglyceride, 3.9% PPP, 69.3% PSP, 19.3% PSS and 3.7% SSS. The total PSP and PSS is 88.6%. The ratio of PSP:PSS is 3.6:1. It also contains other triglycerides.

These shortening blends are fully melted at about 150 °F (65 °C) and frozen by pouring the melted fat into a pie tin sitting in an ice bath. After allowing the sample to cool for about 3 minutes the samples are tempered at 85°F (29°C) for 48 hours and then returned to 70°F (21°C) for 2 days. For comparison purposes a standard Crisco® shortening sample is melted and recrystallized using the above sample freezing and tempering procedure and compared to shortening frozen using normal shortening processing (i.e. similar to that described in Example 1). The full melting point and the onset of crystallization of each blend is measured with a Perkin Elmer DSC 4 model using a cooling and heating rate of 5°C per minute. The rate of crystallization at mouth temperature is measured by fully melting each sample and then placing the sample in a 92°F (33.3°C) bath. The %solids are measured with a Brucker low magnetic resonance unit (using the direct method of measuring solid fat content) after 15 minutes of hold time in the 92°F (33.3°C) bath.

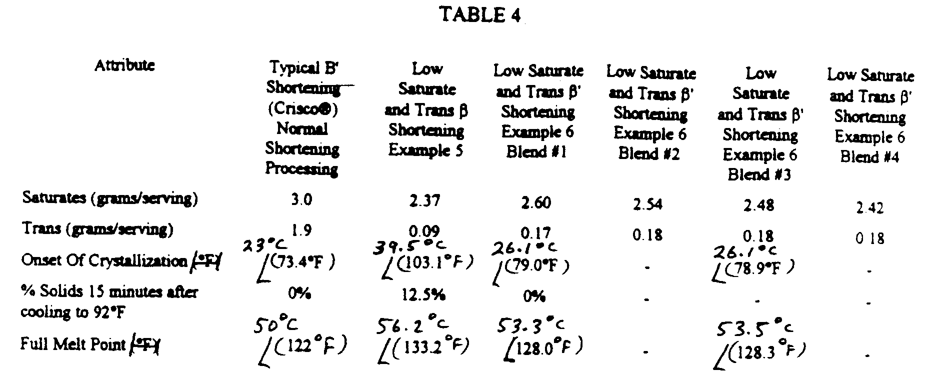

## Claims

1. A non-fluid, low saturate low trans, beta prime stable, plastic shortening, consisting of:
a) from 74% to 90% by weight of a base oil having less than 10% by weight of trans fatty acids, and less than 16% saturated fatty acids;
b) from 10% to 20% by weight of a beta prime stable crystalline hardstock consisting of at least 65% of PSP and PSS, wherein PSP is 2-stearoyl-1,3-dipalmatin glyceride and PSS is 1-palmitoyl-2,3-distearin glyceride, wherein the ratio of PSP:PSS is at least 0.8 to 1.0 from 0 to 30% other triglycerides or synthetic fats and from 0 to 5% monoglycerides or diglycerides.

2. A non-fluid, low saturate, low trans, beta prime stable, plastic shortening, comprising from 6% to 25% by volume, of an inert gas and from 60% to 94% by volume of a fat phase comprising:
a) from 74% to 90% by weight of a base oil having less than 10% by weight of trans fatty acids, and less than 16% saturated C₄-C₂₆ fatty acids,
b) from 10% to 20% by weight of a beta prime stable crystalline hardstock consisting of at least 65% of PSP and PSS, wherein PSP is 2-stearoyl-1,3-dipalmatin glyceride and PSS is 1-palmitoyl-2,3-distearin glyceride, wherein the ratio of PSP:PSS is at least 0.8 to 1.0 from 0 to 30% other triglycerides or synthetic fats and from 0 to 5% monoglycerides or diglycerides.

3. A shortening composition according to Claim 1 or 2 comprising from 25 ppm to 500 ppm of an added antioxidant, wherein said antioxidant is selected from butylated hydroxytoluene, butylated hydroxyanisole, rosemary extract, tocopherols, citric acid, methyl silicone, ascorbic acid esters, ascorbic acid, ethylenediaminetetraacetic acid, tert-butyhydroquinone, ascorbyl palmitate, propyl gallate, citric acid esters or mixtures thereof.

4. A shortening composition according to Claim 1, 2 or 3 comprising from 1% to 8% of an emulsifier.

5. A shortening composition according to Claim 4 wherein said beta prime crystalline hardstock consists of from 35% to 98% PSP.

6. A shortening composition according to Claim 4 wherein said beta prime crystalline hardstock consists of from 2% to 65% PSS.

7. A shortening composition according to Claim 2 wherein said inert gas is from 8% to 23% by volume and is selected from nitrogen, argon, helium, carbon dioxide and mixtures thereof.

8. A shortening composition according to Claim 1, 2, 3, 4, 5, 6 or 7 wherein said base oil is selected from vegetable, animal or marine oils, hydrogenated vegetable, animal or marine oils, modified vegetable oil, modified animal or marine oils, microbial oils, synthetic oils, low calorie oils, fractionated oils, high oleic sunflower oil, refined and bleached canola oil, or mixtures thereof having less than 10% saturated fatty acids.

9. A shortening composition according to claim 1, 2, 3, 4, 5, 6, 7, or 8 wherein said beta prime is selected from hydrogenated palm oil, hydrogenated fractionated cottonseed oil, hydrogenated Chinese vegetable tallow, hydrogenated Phulwara butter, synthetic triglycerides of palmitic and stearic acid, and mixtures of.

10. A shortening composition according to Claim 3 wherein the said emulsifier is from 1% to 6% of the composition, said emulsifier is selected from superglycerinated fat, distilled monoglycerides or mixtures thereof; said emulsifier having from 25% by weight to 95% by weight monoglyceride.

## Patentansprüche

1. Nicht flüssiges, niedrig gesättigtes, beta-prime-stabiles, plastisches Backfett mit geringem trans-Gehalt, bestehend aus:
a) 74 bis 90 Gew.-% eines Grundöls mit weniger als 10 Gew. -% trans-Fettsäuren und weniger als 16% gesättigten Fettsäuren;
b) 10 bis 20 Gew.-% einer beta-prime-stabilen, kristallinen Hart-Grundmasse, bestehend aus mindestens 65% PSP und PSS, wobei PSP für 2-Stearoyl-1,3-dipalmitinglycerid und PSS für 1-Palmitoyl-2,3-distearinglycerid stehen, wobei das Verhältnis von PSP:PSS mindestens 0.8 bis 1,0 beträgt, und 0 bis 30% anderen Trigylceriden oder synthetischen Fetten, und 0 bis 5% Monoglyceriden der Diglyceriden.

2. Nicht flüssiges, niedrig gesättigtes, beta-prime-stabiles, plastisches Backfett mit geringem trans-Gehalt, umfassend 6 bis 25 Vol.-% eines Inertgases und 60 bis 94 Vol.-% einer Fettphase, umfassend:
a) 74 bis 90 Gew.-% eines Grundöls mit weniger als 10 Gew.-% trans-Fettsäuren und weniger als 16% gesättigten C₄-C₂₆-Fettsäuren.
b) 10 bis 20 Gew-% einer beta-prime-stabilen, kristallinen Hart-Grundmasse, bestehend aus mindestens 65% PSP und PSS, wobei PSP für 2-Stearoyl-1,3-dipalmitinglycerid und PSS für 1-Palmitoyl-2,3-distearinglycerid stehen, wobei das Verhältnis von PSP:PSS mindestens 0,8 bis 1,0 beträgt, und 0 bis 30 % anderen Trigylceriden oder synthetischen Fetten, und 0 bis 5 % Monoglyceriden der Diglyceriden.

3. Backfettzusammensetzung nach Anspruch 1 oder 2, umfassend 25 ppm bis 500 ppm eines zugesetzten Antioxidationsmittels, wobei das Antioxidationsmittel aus butyliertem Hydroxytoluol, butyliertem Hydroxyanisol. Rosmarinextrakt, Tocopherolen, Citronensäure, Methylsilicon. Ascorbinsäureestern, Ascorbinsäure, Ethylendiamintetraessigsäure, tert-Butylhydrochinon, Ascorbylpalmitat, Propylgallat, Citronensäureestern oder Mischungen hiervon gewählt ist.

4. Backfettzusammensetzung nach Anspruch 1, 2 oder 3, umfassend 1 bis 8% eines Emulgiermittels.

5. Backfettzusammensetzung nach Anspruch 4, wobei die beta-prime-stabile, Kristalline Hart-Grundmasse aus 35 bis 98% PSP besteht.

6. Backfettzusammensetzung nach Anspruch 4, wobei die beta-prime-stabile, kristalline Hart-Grundmasse aus 2 bis 65% PSS besteht.

7. Backfettzusammensetzung nach Anspruch 2, wobei das Inertgas 8 bis 23 Vol.-% ausmacht und aus Stickstoff, Argon, Helium, Kohlenstoffdioxid und Mischungen hiervon gewählt ist.

8. Backfettzusammensetzung nach den Ansprüchen 1, 2, 3, 4, 5, 6 oder 7, wobei das Grundöl aus pflanzlichen, tierischen oder Meeresölen, hydrierten pflanzlichen, tierischen oder Meeresölen, modifiziertem pflanzlichem Öl, modifizierten tierischen oder Meeresölen, mikrobiellen Ölen, synthetischen Ölen, Ölen mit niedrigem Kaloriengehalt, fraktionierten Ölen, Sonnenblumenöl mit hohem Oleingehalt, raffiniertem und gebleichtem Canolaöl oder Mischungen hiervon mit weniger als 10% gesättigten Fettsäuren gewählt ist.

9. Backfettzusammensetzung nach den Ansprüchen 1, 2, 3, 4, 5, 6, 7 oder 8, wobei die beta-prime-stabile Hart-Grundmasse aus hydriertem Palmöl, hydriertem fraktioniertem Baumwollsamenöl, hydriertem chinesischem Pflanzentalg, hydrierter Phulwara-Butter, synthetischen Triglyceriden aus Palmatin- und Stearinsäure und Mischungen hiervon gewält ist.

10. Backfettzusammensetzung nach Anspruch 3, wobei das Emulgiermittel 1 bis 6% der Zusammensetzung ausmacht, und wobei das Emulgiermittel aus superglyceriniertem Fett, destillierten Monogylceriden oder Mischungen hiervon gewählt ist, wobei das Emulgiermittel 25 bis 95 Gew.-% Monogylcerid aufweist.

## Revendications

1. Shortening plastique non fluide à faible teneur en constituants saturés, a constituants *trans*, à phase bêta prime stable, constitué par :
a) de 74 % à 90 % en poids d'une huile de base ayant moins de 10 % en poids d'acides gras *trans*, et moins de 16 % d'acides gras saturés ;
b) de 10 % à 20 % en poids d'une graisse solide cristalline à phase bêta prime stable comprenant au moins 65 % de PSP et de PSS, PSP étant le glycéride 2-stéaroyl-1,3-dipalmatine et PSS étant le glycéride 1-palmitoyl-2,3-distéarine, dans laquelle le rapport PSP:PSS est d'au moins 0,8 à 1,0, et de 0 à 30 % d'autres triglycérides ou graisses synthétiques et de 0 à 5 % de monoglycérides ou diglycérides.

2. Shortening plastique non fluide à faible teneur en constituants saturés, en constituants *trans*, à phase bêta prime stable, comprenant de 6 % à 25 % en volume d'un gaz inerte et de 60 % à 94 % en volume d'une phase grasse comprenant :
a) de 74 % à 90 % en poids d'une huile de base ayant moins de 10 % en poids d'acides gras *trans*, et moins de 16 % d'acides gras en C₄ à C₂₆ saturés ;
b) de 10 % à 20 % en poids d'une graisse solide cristalline à phase bêta prime stable comprenant au moins 65 % de PSP et de PSS, PSP étant le glycéride 2-stéaroyl-1,3-dipalmatine et PSS étant le glycéride 1-palmitoyl-2,3-distéarine, dans laquelle le rapport PSP:PSS est d'au moins 0,8 à 1,0, et de 0 à 30% d'autres triglycérides ou graisses synthétiques et de 0 à 5 % de monoglycérides ou diglycérides.

3. Composition de shortening selon la revendication 1 ou 2, comprenant de 25 ppm à 500 ppm d'un antioxydant ajouté, dans laquelle ledit antioxydant est choisi parmi l'hydroxytoluène butylé, l'hydroxyanisol butylé, un extrait de romarin, les tocophérols, l'acide citrique, la méthylsilicone, les esters de l'acide ascorbique, l'acide ascorbique, l'acide éthylènediaminetétraacétique, la tert-butylhydroquinone, le palmitate d'ascorbyle, le gallate de propyle, les esters de l'acide citrique ou des mélanges de ceux-ci.

4. Composition de shortening selon la revendication 1, 2 ou 3, comprenant de 1 % à 8 % d'un émulsifiant.

5. Composition de shortening selon la revendication 4, dans laquelle ladite graisse solide cristalline bêta prime est composée de 35 % à 98 % de PSP.

6. Composition de shortening selon la revendication 4, dans laquelle ladite graisse solide cristalline bêta prime est composée de 2 % à 65 % de PSS.

7. Composition de shortening selon la revendication 2, dans laquelle ledit gaz inerte représente de 8 % à 23 % en volume et est choisi parmi l'azote, l'argon, l'hélium, le dioxyde de carbone et des mélanges de ceux-ci.

8. Composition de shortening selon la revendication 1, 2, 3, 4, 5, 6 ou 7, dans laquelle ladite huile de base est choisie parmi les huiles végétales, animales ou marines, les huiles végétales, animales ou marines hydrogénées, une huile végétale modifiée, les huiles animales ou marines modifiées, les huiles microbiennes, les huiles synthétiques, les huiles peu caloriques, les huiles fractionnées, l'huile de tournesol riche en acide oléique, l'huile de canola raffinée et décolorée, ou des mélanges de celles-ci ayant moins de 10 % d'acides gras saturés.

9. Composition de shortening selon la revendication 1, 2, 3, 4, 5, 6, 7 ou 8, dans laquelle ladite phase bêta prime est choisie parmi l'huile de palme hydrogénée, l'huile de coton fractionnée hydrogénée, le suif végétal de Chine hydrogéné, le beurre d'arbre à beurre (*phulwara*) hydrogéné, les triglycérides synthétiques de l'acide palmitique et stéarique, et des mélanges de ceux-ci.

10. Composition de shortening selon la revendication 3, dans laquelle ledit émulsifiant représente de 1 % à 6 % de la composition, ledit émulsifiant est choisi parmi une graisse superglycérinée, les monoglycérides distillés ou des mélanges de ceux-ci, ledit émulsifiant ayant de 25 % en poids à 95 % en poids de monoglycéride.
